# EUROPEAN PATENT APPLICATION

(11) **EP 1 335 288 A2**
(43) Date of publication of application: **13.08.2003**
(21) Application number: 03360001.6
(22) Date of filing: 10.01.2003
(51) Int. Cl.: G06F 9/50

(54) **Method for processing concurrent events in a web-based application, supporting system and application system using the same**

(30) Priority: 01.02.2002 CN 02110723
(71) Applicant: EVOLIUM S.A.S., 75008 Paris (FR)
(72) Inventor: Zhao, Wenjie, Pudong new area, Shangai 200122 (CN)
(74) Representative: Kugler, Hermann, Dipl.-Phys.

(57) **Abstract**

The invention discloses a method for processing at least one event in a Web-based application system. The method comprises the steps of receiving a request and activating a sub-window in a main window for the request; assigning an ID for the request; setting a time interval for the request; specifying a result storage location for the request according to the assigned ID; allotting a service routine for the request; processing the request by using the service routine; storing the processing result in the specified result storage location; polling arrival of processing results at the time interval; and displaying the processing result. This method can be used for processing two and more requests concurrently by considering restrictive relationships thereof. The method may further transfer the request to the backbone application service and listen to the reply therefrom. The method may further display processing statuses in real time in addition to the process result. The present invention also provides a web-based application supporting system and a web-based application system using the above method.

## Description

### Field of the Invention

This invention relates to a method and system for processing events in a Web-based application, more particularly, to a method and system for processing concurrent events in a Web-based application.

### Technical Background

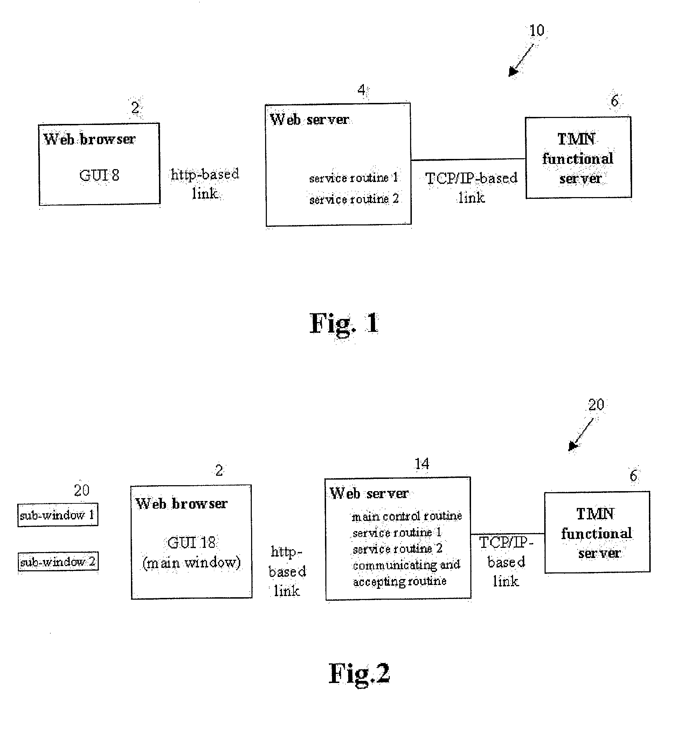

The Web technology is widely used in various applications due to its advantages in aspects of space and time. Some applications are based on connection of a Web server to a backbone application server such as a Telecommunication Management Network (TMN) functional server. Fig. 1 is a block diagram schematically showing a conventional structure of a Web-based TMN application system. A Web-based TMN application system 10 consists of a Web browser 2, a Web server 4, and a TMN functional server 6. The Web browser 2 provides a Graphic User Interface (GUI) 8 through which a request may be issued by a user. A http-based link is used to connect the Web browser 2 with the Web server 4. Requests made in GUI are transmitted to the Web server 4 via the http-based link. The Web Server 4 comprises many service routines for processing various requests from the GUI. If necessary, the service routines may dispense the requests to the TMN functional server 6 in the downstream. The service routines also listen to the reply from the TMN functional server 6. Generally, a TCP/IP-based link, such as Q3/CORBA, is used to connect the Web server 4 with the TMN functional server 6. When a process result is available, the corresponding service routine feeds it back to the GUI via the http-based link.

The http-based connection is transient and stateless. More specifically, when a use clicks in a HTML page, a request is issued through the web browser 2, and the request is transmitted to the Web server 4 via the http-based link. In the Web server 4, a particular service routine is assigned to proceed a background process and feed the result back via the http-based link very quickly. Therefore, the http-based connection results in the following disadvantages:
1) The browser 4 can only obtain processing information from the Web server at a time point; that is, the user can not obtain all the processing statuses in real time during a time period.
2) Only those requests with short process periods can be processed. If a processing result appears beyond a predetermined time period, it can not be obtained.
3) The requests can be processed only in turns rather than in parallel.

On the contrary, the TCP/IP-based connection between the Web server 4 and the TMN functional server 6 is permanent. More specifically, when a particular service routine in the Web server 4 dispenses a request to the TMN function server 6, the service routine will not stop listening to the reply from the TMN functional server 6 until a result is received. Therefore, the TCP/IP-based connection results in the following characteristics:
1) Processing statuses can be obtained in real time during the processing period of a request;
2) Those requests with long processing periods can be processed; and
3) Several requests may be processed in parallel.

Summing up the above analyses to both the http-based connection and the TCP/IP-based connection, a prior structure of a Web-based TMN application system is limited to process a single request at a time. It can not process concurrent events which interacts with one another. If a new request is issued while a previous request is being processed, the on-going processing will be stopped with no information provided to the user. The system will begin to respond to the new request. Furthermore, the system is not suitable for the requests which need real-time/asynchronous communication.

### Summary of the Invention

The present invention provides a method for processing at least one event in a Web-based application system, said Web-based application system comprising a web browser, a web server connected with said web browser via a http-based link, and a backbone application server connected with said web server via a TCP/IP-based link, characterized in that said method comprises the steps of:
a) receiving at least one request and activating at least one sub-window in a main window for said at least one request;
b) assigning at least one unique ID for said at least one request;
c) setting at least one time interval for said at least one request;
d) specifying at least one result storage location for said at least one request according to said assigned ID;
e) allotting at least one service routine for said at least one request;
f) processing said at least one request by using said at least one service routine;
g) storing at least one processing result in said at least one specified result storage location;
h) polling arrival of said processing results at said at least one time interval;
i) displaying said at least one processing result.

This new method can be used for processing at least two events. At that time, the steps of a)-i) may be executed concurrently for at least two requests. In some cases, the steps of processing one of said at least two requests are suspended by restrictive conditions between said one request and other requests.

In this method, the step of processing said request may comprise the steps of transferring said request to said backbone application server for processing, and receiving processing statuses and/or said processing result from said backbone application server. In this method, the step of displaying said process result comprises the steps of closing the sub-window automatically and displaying the process result in the main window.

The present invention further provides a Web-based application system for processing at least one event, said Web-based application system comprising a web browser, a web server connected with said web browser via a http-based link, and a backbone application server connected with said web server via a TCP/IP-based link, characterized in that said system comprises:
means for receiving at least one request and activating at least one sub-window in a main window for said at least one request;
means for presetting attributes for said at least one request, said attributes including an unique ID, a time interval, and a corresponding storage location;
at least one service unit for processing said at least one request;
means for allotting said at least one service units to said at least one request;
means for storing at least one processing result in said corresponding storage location;
means for polling arrival of said at least processing results at said at least one time interval;
means for displaying said at least one processing result.

The present system may further comprise means for controlling said at least one service unit according to restrictive relationships between two and more requests. The control means may be configured for suspending the processing of said at least service unit when a restrictive condition for said processing occurs.

The service units may be configured for transferring said at least request to said backbone application server for processing, and receiving said processing statuses and/or said processing result from said backbone application server. In this situation, the system may further comprise means for storing process statuses, and means for displaying said process statuses. In the present system, means for displaying said process result may comprise means for closing said sub-window automatically and displaying said process result in said main window, and means for displaying said process statuses may further comprise means for closing said sub-window abnormally and displaying a current processing status and abnormal termination information in said main window. As can be seen, the present invention provides the Web-based backbone application system with a new supporting system at the side of the Web server. The supporting system provides a plurality of sub-windows with unique IDs, polling intervals and corresponding result storage locations. As a result of the implementation of ID identification, asynchronous coordination, event response, message distribution and the cooperation thereof, transient communications are allowed between the Web browser and the Web server at an adjustable frequency; a plurality of events can be processed concurrently; sub-windows look as follow-up windows, reflecting the processing statuses in real time; the results can be obtained in time and on the basis of an asynchronous communication. Any interruptions applied to a request session will not affect other requests. Abnormal closure of a sub-window will result in the current processing status and abnormal termination information displayed in the main window. The problems with respect to real time, asynchrony and concurrency in the prior art is solved.

### Brief Description of the Drawings

Fig. 1 is a block diagram schematically showing a conventional structure of a Web-based TMN application system.
Fig. 2 is a block diagram schematically showing an exemplary structure of a Web-based TMN application system according to the present invention.
Fig.3 is a flow chart showing an operation of the GUI according to the present invention.
Fig. 4 is a flow chart showing an operation of the Web server according to the present invention.
Fig.5 is a block diagram showing operation statuses of the GUI for an embodiment of a Web-based TMN application system according to the present invention.
Fig.6 is a block diagram showing operation statuses of the Web server for an embodiment of a Web-based TMN application system according to the present invention.

### Detailed Description of the Preferred Embodiments

Reference will now be made in detail to the present preferred embodiments of the invention, examples of which are illustrated in the accompanying drawing. Wherever possible, the same reference numbers will be used throughout the drawings to refer to the same or like parts.

Fig. 2 is a block diagram schematically showing an exemplary structure of a Web-based TMN application system according to the present invention. The Web-based TMN application system 20 consists of a Web browser 2, a Web server 14, and a TMN functional server 6. As usual, the Web browser 2 provides a Graphic User Interface (GUI) 18 through which a request may be issued by a user, a http-based link is used to connect the Web browser 2 with the Web server 14, and a TCP/IP-based link is used to connect the Web server 14 with the TMN functional server 6. In the present invention, the Web server 14 comprises a main control routine, some service routines and a communicating and accepting routine.

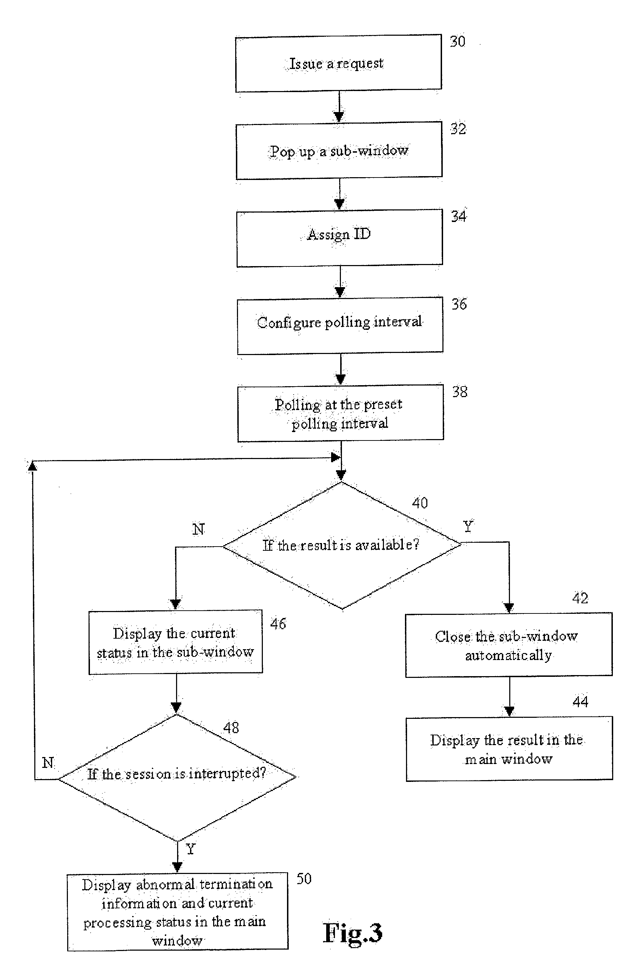

Fig.3 is a flow chart showing an exemplary operation of the GUI according to the present invention. When the use clicks for a request in a main window of the GUI (Step 30), a sub-window 20 will be popped up (Step 32). Then, the main control routine in the Web server 14 assigns a unique identifier (ID) to the sub-window 20 in Step 34, and configures a polling interval for the sub-window 20 in Step 36. Alternatively, with respect to the polling interval, it may also be set in the sub-window 20. The sub-window 20 is designed to poll the Web server 14 at the preset polling interval. The purpose of polling is to realize in real time whether the processing result is available (Step 40). If the sub-window is informed of arrival of the result, it will be closed automatically in Step 42, displaying the result in the main window (Step 44). If the result is not available, a current processing status will be fetched and displayed in the sub-window 20 (Step 46). It seems that the sub-window 20 is following up the process. Therefore, a sub-window can also be referred to as a follow-up window. If the request session is interrupted by the user during the period of processing the request (Step 48), for example, the sub-window is closed on the user's initiative, the current processing status and abnormal termination information will be displayed in the main window (Step 50). In the present invention, more than one request may be processed in parallel. If the requests do not interact with one another, the concurrent processes may proceed independently. Abnormal closure of a sub-window will not affect other requests.

As mentioned above, the Web server 14 comprises a main control routine, some service routines, and a communicating and accepting routine. The main control routine is programmed for a) assigning an ID for each request, configuring a polling interval for each request, and specifying a storage location in a result repository for storing processing statuses and/or processing result with respect to each request; b) allocating the requests to specific service routines according to their synchronous/asynchronous attributes; c) receiving pollings from the sub-windows 20 and informing arrivals of the results; d) controlling the processes for the requests according to additional execution conditions; and e) canceling the related information when the sub-window is closed. With use of the main control routine, each request has a unique ID, a polling interval, and a corresponding storage location for storing processing statuses and/or result.

There are two types of service routines. One type is programmed for processing the requests with a synchronous attribute (that is, they are based on synchronous communication), and storing the processing results to the corresponding storage locations specified by the main control routine. Another type is programmed for processing the requests with an asynchronous attribute (that is, they are based on asynchronous communication). The second type of service routines function to transfer the requests to the backbone application service, such as a TMN functional server, via the communicating and accepting routine, and store the processing statuses to the specified storage locations in real time.

The communicating and accepting routine is programmed for listening to the reply from the TMN functional routine, and storing the processing result to the specified storage location.

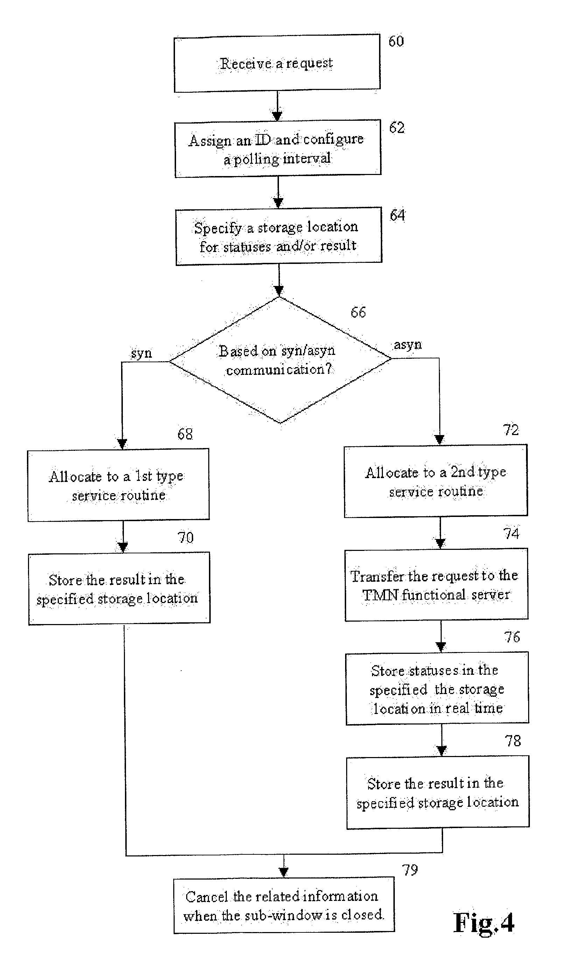

Fig. 4 is a flow chart showing an exemplary operation of the Web server according to the present invention. When the Web server 14 receives a request from the Web browser 2 (Step 60), the main control routine assigns a unique ID for the request, and configures a polling interval for it (Step 62). Also a storage location is specified for storing processing statuses and/or processing result with respect to the request (Step 64). Then in Step 66, the operation attribute of the request are judged. If the request is based on a synchronous communication in Step 66, the main control routine allocates it to a service routine of first type (Step 68). While the processing is completed, the service routine directly stores the process result in the storage location specified for the request (Step 70). If the request is based on an asynchronous communication in step 66, the main control routine allocates it to a service routine of second type (Step 72). In Step 74, the specified service routine transfers the requests to the TMN functional server via the communicating and accepting routine. The communicating and accepting routine functions to being listen to the reply from the TMN functional service, therefore the service routine can obtain processing statuses from the TMN functional server in real time and store them in the storage location specified for the request (Step 76). When the communicating and accepting routine obtains the process result from the TMN functional server, it store the result in the specified storage location (Step 78). When the sub-window is closed, the main control routine will cancel the related information from the Web-server, including the ID, the polling intervals, the processing statuses, the processing results, etc. (Step 79).

In the present invention, the above-mention process can be implemented concurrently for more than one request.

During the processing, when the main control routine receives a polling from a sub-window, it will check the corresponding storage location and inform the sub-window whether the result arrives or not.

Furthermore, the main control routine can control the processes for the requests according to addition execution conditions. For example, when one request is being processed, the main control routine may receives another request which requires to lock the previous one. In this situation, the main control routine will lock the previous request according to the addition execution condition applied by the second one. Another example of additional execution condition is that two requests are forbidden to process concurrently. If a second request is issued during the processing of the first one, the processing of the second request will be delayed until the first process is completed.

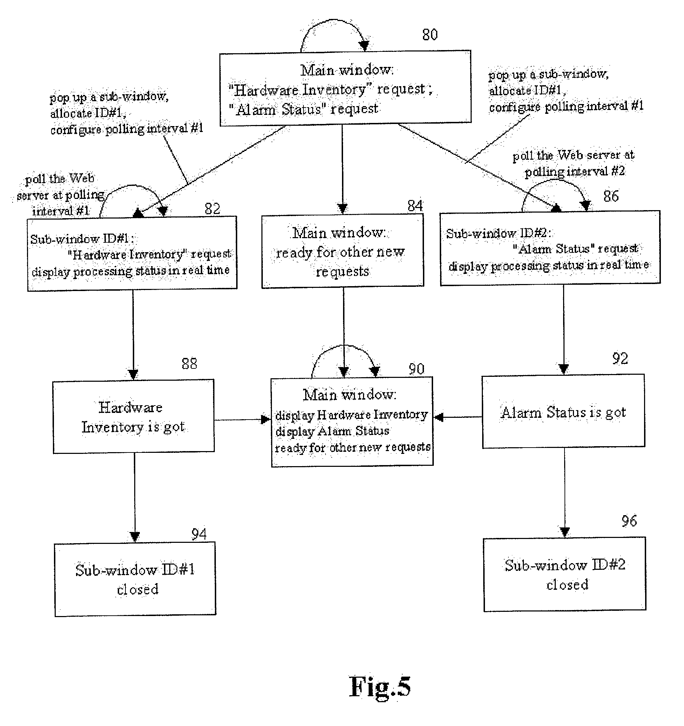

It would be understood that the present invention can be applied to various backbone application servers. As an example, the following describes a process for a Web-based TMN application system of the present invention to concurrently process a "Hardware Inventory" request and a "Alarm Status" request. Fig.5 is a block diagram showing operation statuses of the GUI for this application. At the first stage, in Block 80, the user clicks two requests in the main window of the GUI, one is a request for displaying a "Hardware Inventory" (hereinafter referred to as Request 1), the other is a request for displaying a "Alarm Status" (hereinafter referred to as Request 2). Then, two sub-windows are popped up, identifiers ID#1 and ID#2 are allocated, and polling intervals #1 and #2 are configured for the two sub-windows, respectively. Now, the process goes to the second stage. At that time, in Block 82, Sub-window ID#1 is established for Request 1 and it polls the Web server 14 at polling interval #1. In Block 86, Sub-window ID#2 is established for Request 2 and it polls the Web server 14 at polling interval #2. Meanwhile, the main window is still ready for other new requests (Block 84). After each polling, the fetched processing progresses are displayed and updated in the sub-windows. As the two requests in this case are not associated with each other, their processes will goes independently. When the requested Hardware Inventory is has been got in Block 88, Sub-window #1 is closed automatically in Block 94 and the resulted Hardware Inventory is displayed in the main window in Block 90. Similarly, when an Alarm Status has been got in Block 92, Sub-window #2 is closed automatically in Block 96 and the Alarm Status is displayed in the main window in Block 90. The main window is always ready for any new requests.

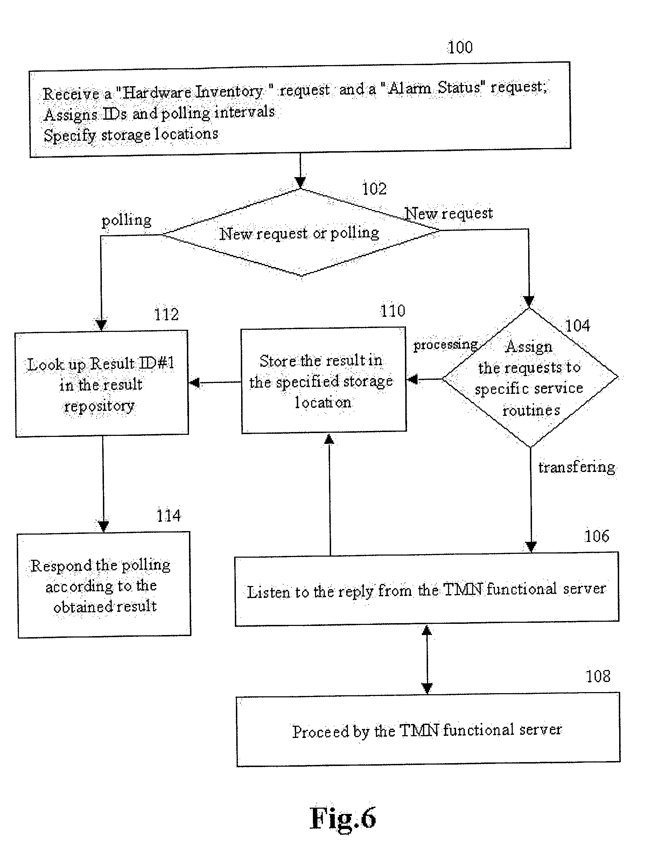

Fig.6 is a block diagram showing operation statuses of the Web server for an embodiment of a Web-based TMN application system according to the present invention. In Block 100, a "Hardware Inventory " request and a "Alarm Status" request are received from the GUI. At the same time, the main control routine assigns IDs and polling intervals to them respectively. As arrived are two new requests in Block 102, the process goes to Block 104. The main control routine assign the requests to specific service routines which can process by themselves or transfer the request to the TMN functional server. If the received request is assigned to a service routine for processing directly, the result is stored in a specified storage location in the result repository when it is completed (Block 110). In the present case, both the requests are assigned to the service routines for transferring to the TMN functional server via the communicating and accepting routine. While proceeding by the TMN functional server (Block 108), the communicating and accepting routine is listening to the reply from the TMN functional server (Block 106). If the requested "Hardware Inventory" is feed back, the inventory will be positioned to Location ID#1 in the result repository for the main control routine to look up (Block 110). In another aspect, the main control routine is always waiting for pollings from sub-windows ID#1 and ID#2. If a polling for the Hardware Inventory is received from sub-window ID#1 in Block 102, the main control routine looks up Result ID#1 in the result repository in Block 112. Then, the main control routine responds the polling from ID#1 according to the obtained result in Block 108. The "Alarm Status" is processed in a similar way.

The present invention can also be applied to other applications. For example, the present invention can be applied to a Web-based traffic control system to implement a remote vehicle dispatch by means of real-time, asynchrony and concurrency. In this embodiment, a Global Position System is used as a service supporting system, "Taxi 1 to be at Place 1" and "Traffic conditions of Place 1" can be set as two concurrent requests. The difference of this embodiment from the above one is that the present two requests are associated with each other. For example, if the reply to the first request shows that the ways from the current position of Taxi 1 to Place 1 is jammed, then the main control routine will stop processing the first request. By viewing the result for jamming, the user may issue a new request, such as "Taxi 2 to be at Place 1".

It will be apparent to those skilled in the art that various modifications and variations can be made to the present invention without departing from the spirit or scope of the invention. Thus, it is intended that the present invention covers the modifications and variations provided they come within the scope of the appended claims and their equivalents.

## Claims

1. A method for processing at least one event in a Web-based application system, said Web-based application system comprising a web browser, a web server connected with said web browser via a http-based link, and a backbone application server connected with said web server via a TCP/IP-based link, **characterized in that** said method comprises the steps of:
a) receiving at least one request and activating at least one sub-window in a main window for said at least one request;
b) assigning at least one unique ID for said at least one request;
c) setting at least one time interval for said at least one request;
d) specifying at least one result storage location for said at least one request according to said assigned ID;
e) allotting at least one service routine for said at least one request;
f) processing said at least one request by using said at least one service routine;
g) storing at least one processing result in said at least one specified result storage location;
h) polling arrival of said processing results at said at least one time interval;
i) displaying said at least one processing result.

2. A method according to claim 1, wherein the method processes at least two events, the steps of a)-i) are executed concurrently for at least two requests, and wherein the steps of processing one of said at least two requests are controlled by restrictive relationships between said one request and other requests.

3. A method according to claim 1 or 2, wherein the step of processing said request comprises the steps of transferring said request to said backbone application server for processing, and receiving processing statuses and/or said processing result from said backbone application server.

4. A method according to claim 1, wherein the step of displaying said process result comprises the steps of closing said sub-window automatically and displaying said process result in said main window.

5. A Web-based application system for processing at least one event, said Web-based application system comprising a web browser, a web server connected with said web browser via a http-based link, and a backbone application server connected with said web server via a TCP/IP-based link, **characterized in that** said system comprises:
means for receiving at least one request and activating at least one sub-window in a main window for said at least one request;
means for presetting attributes for said at least one request, said attributes including an unique ID, a time interval, and a corresponding storage location;
at least one service unit for processing said at least one request;
means for allotting said at least one service units to said at least one request;
means for storing at least one processing result in said corresponding storage location;
means for polling arrival of said at least processing results at said at least one time interval;
means for displaying said at least one processing result.

6. A system according to claim 5 further comprising means for controlling said at least one service unit according to restrictive relationships between two and more requests.

7. A system according to claim 5 or 6, wherein said at least one service unit is configured for transferring said at least request to said backbone application server for processing, and receiving said processing statuses and/or said processing result from said backbone application server.

8. A system according to claim 7 further comprising means for storing process statuses, and means for displaying said process statuses.

9. A system according to claim 5, wherein means for displaying said process result comprises means for closing said sub-window automatically and displaying said process result in said main window.

10. A system according to claim 8, wherein means for displaying said process statuses further comprises means for closing said sub-window abnormally and displaying a current processing status and abnormal termination information in said main window.

11. A system according to claim 8, wherein said control means is configured for suspending the processing of said at least service unit when a restrictive condition for said processing occurs.
